# EUROPEAN PATENT SPECIFICATION

(11) **EP 2 073 057 B1**
(45) Date of publication and mention of the grant of the patent: **13.06.2012**
(21) Application number: 08171339.8
(22) Date of filing: 11.12.2008
(51) Int. Cl.: G02F 1/167, G02F 1/1335, G02F 1/1339

(54) **Display with colour filter**
Anzeige mit Farbfilter
Affichage avec filtre couleur

(30) Priority: 17.12.2007 US 957736
(43) Date of publication of application: 24.06.2009
(73) Proprietor: Palo Alto Research Center Incorporated, Palo Alto, California 94034 (US)
(72) Inventor: Daniel, Jurgen H., San Francisco, CA 94131 (US); Ready, Steven E., Los Altos, CA 94024 (US)
(74) Representative: Skone James, Robert Edmund

(56) References cited:
- EP-A- 1 544 668
- US-A1- 2003 063 369
- US-A1- 2004 227 985
- US-A1- 2005 007 650
- US-A1- 2005 094 248
- US-A1- 2005 285 921
- US-A1- 2006 132 579
- US-A1- 2006 209 010
- US-A1- 2007 223 079
- US-B1- 7 136 216

## Description

Particle based displays, such as electrophoretic displays, magnetophoretic displays and powder displays often contain a display material that absorbs or reflects light depending on an applied electric or magnetic field. However, the display material does not control color. Instead, color filters positioned adjacent the display material are used to achieve a broad spectrum of colors. The technique is analogous to that used in liquid crystal displays. In liquid crystal displays the liquid crystal material controls light transmission through color filters formed adjacent to the black matrix. The black matrix prevents light leakage between the different colour pixel areas.

Forming color filters over the display represents a challenge. U.S. Patent Appl. US2002/0196525A1 filed December 26, 2002 entitled "Process for Imagewise Opening and Filling Color Display Components and Color Displays Manufactured Thereof by Xianhai Chen et al describes using photolithography and color inks to pattern a color display. However the described photolithographic methods are complex. Process complexity increases costs and reduces process reliability.

Another method of achieving color electrophoretic displays using jet-printing is described in US Patent Application US2002/0166771 and uses dyed electrophoretic fluids, however development of electrophoretic inks with different colors is required. Some electrophoretic materials are not easily dyed. Thus a simpler method of forming a display including color filters is needed.

US-A-2005/0094248, on which the preamble of claim 1 is based, describes another example of a display device defined by partitions within which a dispersion medium is located. A coloured layer extends over the top of the partitions and dispersion medium. The problem with this approach is that the coloured material is not confined to the cells.

US-A-2006/0209010 discloses another display device having an array of cells in which display solvents are located and with colour filters above.

According to a first aspect of the invention, a display as defined in claim 1 is provided. According to a second aspect of the present invention, a method as defined in claim 7 is provided.

According to a third aspect of the invention, a method as defined in claim 10 is provided. sealing the display material.

Some examples of displays and methods according to the invention will now be described with reference to the accompanying drawings, in which:-

Figure 1 shows a cell structure including a cell wall used to confine both display material and a color filter that is jet printed into the cell.
Figure 2 shows a similar cell structure where multiple cells correspond to each pixel of a display.

Figure 3 shows the structure of Figure 1 after a sealing layer has been deposited to seal the cells.

Figure 4 shows a cell structure where the filter material is jet printed into the cell prior to deposition of the display material.

Figure 5a shows an embodiment in which the sidewalls of the cell are partially coated with the filter material prior to deposition of the display material.

Figure 5b shows a slight modification of the embodiment of Figure 5a to produce a coating layer that enables different materials to coat the base and sidewalls of the cell.

Figure 6 shows cells that include cell walls angled with respect to an underlying substrate.

### DETAILED DESCRIPTION

Typical displays, particularly particle displays, utilize an array of cell structures that confine a display material. The design described herein takes advantage of the cell structure walls that confine the display material to also confine a color filter material. In one deposition technique, the filter material is jet printed into the cells of the structure, although other deposition techniques may be used. The use of the same walls to confine both the particles/particle suspension and the filter material greatly facilitates device fabrication.

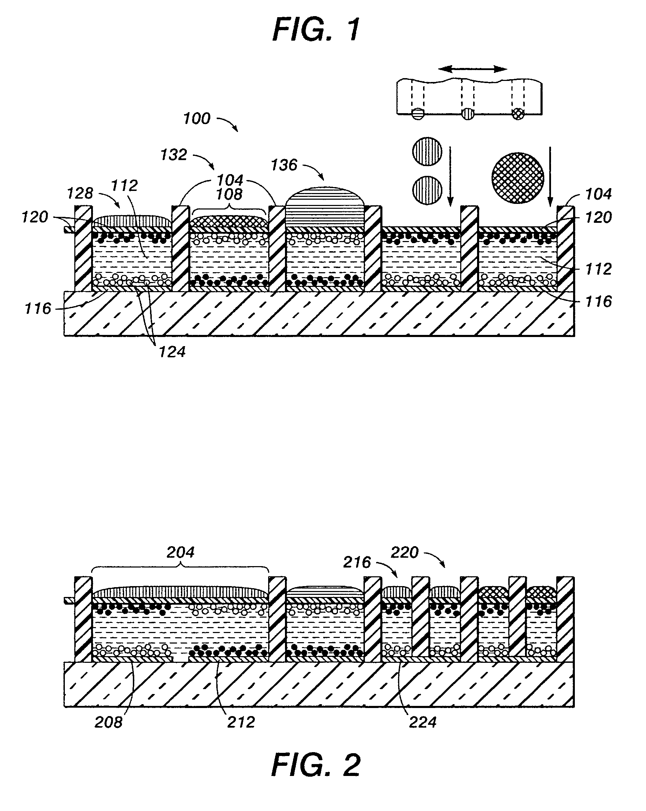

Figure 1 shows one example of a cell structure 100 that includes cell walls 104 confining a display material 112. As used herein, "display material" is broadly defined to include any material that changes light transmissivity or reflectivity based on an applied electrical or magnetic field. Display material may also include materials that change state due to applied heat or due to an electrochemical reaction. In one embodiment, the display material includes display particles. The display material may include a dry material such as a powder or the display material may include display particles suspended in a solution. In one embodiment, an electric or magnetic field moves the display particles to control the light transmissivity or reflectivity of the display material. Examples of typical display particles include, but are not limited to, powder (toner display material), nanoparticles, magnetophoretic particles, and electrophoretic inks. Electrophoretic inks typically consist of electrically charged particles in a carrier liquid. U.S. Patent 7,113,323 by Ho et al. entitled "Magnetophoretic and electromagnetophoretic displays" describes example display materials and their use in a display.

Each cell 108 of cell structure 100 confines a unit of display material 112. As used herein, "cell" is broadly defined as a cavity that has a bottom and is surrounded by walls such that it is suitable for confining a liquid. Each cell typically has lateral and vertical dimensions on the order of tens of microns up to approximately a millimeter. In one embodiment, each cell corresponds to a pixel of a display, thus the width and length of the cell size approximately matches the display pixel dimensions. In alternate embodiments, each pixel may correspond to several cells or a fraction of a cell. Example cell wall heights range from several microns to several millimeters, although displays driven by electrostatic fields (such as electrophoretic liquid and powder displays) typically have cell heights below 500 microns, and more typically between 20 and 50 microns. Electrodes 116 under each cell in conjunction with a counterelectrode, generate an electric field that controls cell light transmissivity or cell reflectivity. In the example of a magnetophoretic display, a controllable magnetic field is substituted for the configuration of electrode 116 and counterelectrode.

Using cells to confine the display particles prevents display particle agglomeration and particle settling. A variety of techniques including etching, ablation, stamping, printing, molding and photolithography, may be used to form the cell walls. One method of forming the cell walls uses jet printing to print materials such as phase-change materials (e.g. waxes), photocurable inks or other polymers such as SU-8 polymer (from Microchem, Corp.). Printing methods may also be used to print the underlying electronics including transistors and pixel circuits that control the electric fields controlling cell transmissivity/reflectivity. Jet printing of circuits, including organic transistor fabrication is described in S.E. Burns et al., MRS Bulletin, Nov. 2003, p829-834. When printed transistors are used in a printed display backplane, printing the walls, the display material and the filters enables fabrication of the entire display using printing techniques. Using jet-printing techniques also facilitates accurate registration or alignment between the backplane and the display medium. Although the cell walls and pixel circuit have been described as being formed by jet printing, more traditional techniques such as photolithography, micromolding, stamping or laser-patterning may also be used.

After cell wall formation, a display material 112 is deposited in each cell. In one embodiment, a jet printer ejects droplets of display material into each cell. The quantity of display material is carefully controlled to not completely fill the cell. Typically, the display material fills less than ~80-95% of the cell volume. Jet-printing allows tight control of the small volumes introduced into each cell. In an alternate embodiment, other techniques such as doctorblading, spray coating or immersion coating may be used to deposit the display material into the cells. In one embodiment, a small amount of the display fluid evaporates (e.g. 20% by volume, more typically between 10% and 30% by volume) after the cells is completely filled by doctorblading to make room for subsequent filter material deposition.

After deposition of display material 112, a sealing layer 120 is deposited over the display material. Various methods, including jet printing, may be used to deposit the sealing layer. In one embodiment, a sealing polymer is deposited over the display material such as is described in U.S. Patent 6,859,302 entitled "Electrophoretic Display and Novel Process for its Manufacture" by Liang et al. The sealing layer is typically several microns thick, although thinner, sub-micron thin layers, or thicker layers, in the range of tens of microns, may also be fabricated by varying the sealing polymer composition.

In an alternative embodiment of forming a sealing layer 120 over a display material 112, sealing material deposition occurs before display material deposition. The later deposited display material sinks down into the sealing material where the sealing material encapsulates the display material. In one embodiment, the display material sinks to the bottom of the cell where the display material wets the underlying substrate. The sealing material then hardens sealing the display material.

Sealing material 120 is typically derived from a sealing fluid. Examples of typical sealing fluids include a polymer dissolved in a solvent. A specific example of a sealing material is a fluorocarbon solution such as Cytop CTX-809A from Asahi Chemicals dissolved in a fluoro-solvent such as a Cytop solvent CT-SOLV180 including Perfluorotrialkylamine, also from Asahi Chemicals, in a ratio of 1 volume part Cytop polymer to 3 volume parts of solvent. Using a solvent that evaporates results in a thin film that will seal the droplets.

Other sealing materials may also be used. For example, fluorocarbon polymers such as two-component Fluorothane™ by Cytonix and UV-curable FluorN™, also manufactured by Cytonix may also be used for sealing solution 220 without a solvent. In the case of UV-curable materials, UV radiation causes cross linking of the molecules to convert the sealing solution from a liquid to a solid and sealing the droplet of display liquid. U.S. Patent Application Publication Number US2005/0285921 by Jurgen Daniel entitled "Methods of Confining Droplets of Display Fluid" filed June 28, 2004 describes a system whereby a display fluid sinks into a sealing fluid solution. Another sealing method using a hydroalcoholic sealing solution is described in U.S. Patent Appl. US2006/0132579A1 by Jurgen Daniel entitled "Flexible Electrophoretic-type display" filed December 20, 2004.

Regardless of the order of deposition, Figure 1 shows sealing material 120 sealing display material 112. The combined sealing material volume and display material volume is still less than the volume of each cell. Typically, the volume of the sealing material and the display material combined is less than ~95% of the cell volume. Thus space remains in the cell to contain a color filter material.

In the embodiment of Figure 1, a filter material 128 is deposited over sealing material 120. The filter material may include a dye or a pigment based polymer solution. In one example, the polymer solution is polyimide-based with an organic solvent. Other materials such as photocurable polymers, hot-melt polymers or multi-component cross-linkable polymers may also be chosen as color filter material. U.S. Patent 6,627,364 gives examples of color filter resins. The color filter material may also contain fluorescent pigments or dyes or quantum dots to increase the brightness or the color tone of the display.

A print-head that ejects droplets, such as a piezo, thermal or electrostatic ink-jet printhead, provides a convenient way to deposit filter material into the remaining cell volume. Using jet-printing techniques allows different color filter materials to be printed in adjacent cells. In one exemplary embodiment, first cell 128 contains a red filter, second cell 132 contains a green filter, and third cell 136 contains a blue filter. After jet-printing, the color filter material initially remains a liquid. Cell walls prevent the liquid from spreading. As the color filter material liquid solution solidifies, it typically forms a thin film. Solidification may occur due to solvent evaporation or by UV curing as in the case of UV light sensitive polymer materials. The color filter material may also solidify by cooling if the material is a phase change material such as a wax that is printed in the melted form. Due to the existing cell walls an additional patterning step of a bank structure (which also often serves as the black matrix between pixels) is not needed.

As used herein, a "pixel" is defined as the smallest addressable unit area on a display. Typically, each pixel in an electrostatically addressed display corresponds to an electrode wherein an electric field between the electrode and a counter electrode (which typically is located on the opposite side of the display medium and often made of ITO) controls the light transmissivity or reflectivity of the display material corresponding to the pixel. The pixels may be part of an active-matrix pixel circuit or the pixels may be defined by the cross-over between two electrodes on opposing sides of the display medium as in passive-matrix displays. In a magnetically addressed display, typically each pixel corresponds to a magnetic structure such as the pole of a magnet. Figure 1 shows the embodiment in which each cell corresponds to a display pixel; however, cell arrangements are not limited to such a one to one correspondence. Figure 2 shows various configurations of cells and pixel defining electrodes. Thus single cell 204 corresponds to multiple pixels defined by electrodes 208, 212. Alternately, cells 216, 220 each correspond to a fraction of a single pixel such as that defined by electrode 224. However, to maximize color resolution, it is usually preferable to have each cell correspond to a single pixel or a fraction of a pixel. In laterally driven (in-plane switching) displays, at least two electrodes for each cell may be arranged in-plane on the bottom substrate and a counter electrode may not be required.

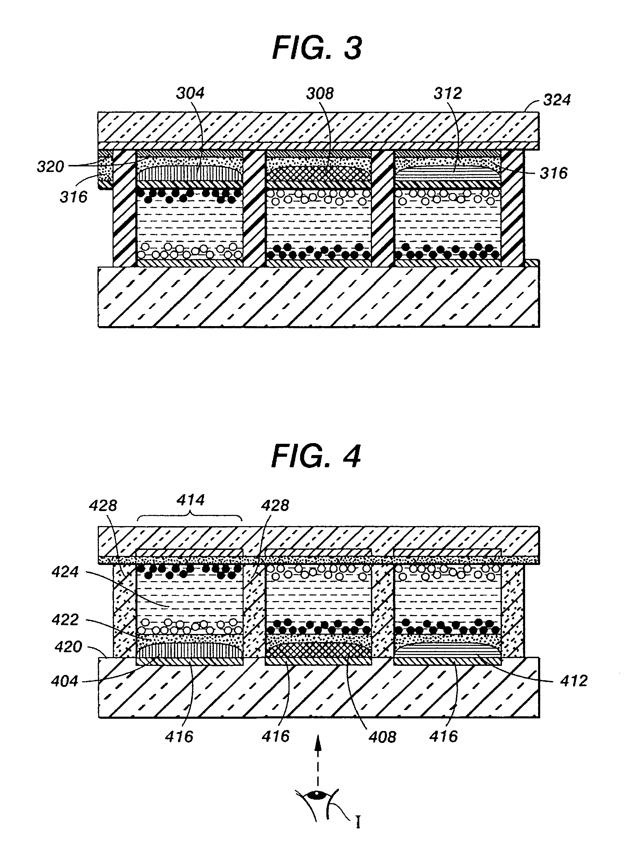

Figure 3 shows a barrier layer 316 or adhesive layer, sealing color filters 304, 308, 312. The barrier layer may be deposited over the color filter to prevent solvents used in later processes from attacking the color filters. In one embodiment, the barrier layer is formed from Cytop (Asahi Glass). Subsequent layers formed over barrier layer 316 may include an anti-reflection layer 320 and a top plate 324. The top substrate is typically a substantially transparent material such as ITO coated glass or indium tin oxide (ITO) coated Mylar. The anti-reflection layer 320 may be a multi-layer coating of materials with varying refractive indices. Alternatively, nanoparticle-based polymer composites have also been used as antireflection coatings.

Barrier layer 316 may be index-matched to reduce reflection at interfaces. For example, the barrier layer may be index-matched to the color filter material. Moreover, the barrier material may be electrically conducting. Conductivity can be achieved by adding carbon nanotubes (CNTs) or other conducting nanowires, fibres, flakes or particles into the material. The barrier material may also contain conducting polymers. A conductive barrier layer 316 that is electrically in contact with the counterplate would reduce the voltage requirement between pixel electrode and counterplate.

Figure 3 shows the cell walls separating the barrier material in adjacent cells. It is not necessary to separate the barrier material in adjacent cells, however, because measuring the exact amount of filter material to precisely fill each cell is difficult. Thus, it is typically easier to slightly underfill each cell with filter material and fill the remaining with layers to be deposited over the filters 304, 308, 312.

Figures 1-3 show structures in which the color filters are deposited over the display material. Figure 4 shows an alternate embodiment in which display material forms over the color filters. In Figure 4, color filter materials 404, 408, 412 are deposited, typically by jet printing into cells 414, directly over the electrodes 416 of a substantially transparent substrate 420. A protective sealing coat 422 separates and protects the color filters from display material 424. The total volume of the color filters and the protective sealing coat only partially fills each cell. Typically color filter layers are only 1-2 micrometers thick, but the actual deposited thickness depends on the dye or pigment concentration in the color filter material and on the desired color saturation. The protective sealing coat may be submicron or up to several micrometers thick. After partially filling the cell with the filter and the sealing material, sufficient volume remains in the cell to confine subsequently deposited display material. Unlike the filter material, it is not necessary that the display material differs from cell to cell, thus various deposition techniques may be used including printing, doctorblading or dipcoating. A liquid display material may be sealed using a multitude of known techniques. When the display material is a solid or a powder, sealing may be accomplished by bonding an adhesive layer to the top of the cavity walls 428. The protective sealing coat over the color filters protects the color filter materials from being attached by the display material (which otherwise might for example swell the color filter material). The protective sealing coat also modifies the surface energy interaction with the display material. Thus a protective sealing coat material may be chosen which has the appropriate interaction with the display material, such as low particle adhesion when the display material is an electrophoretic ink.

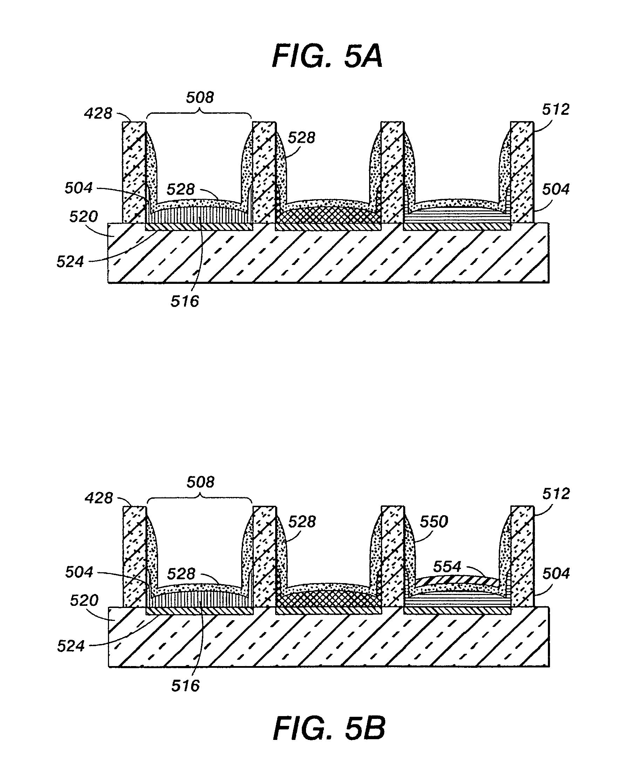

Figure 5 shows modifying the Figure 4 structure to improve the display color appearance. When cavity walls 428 are not completely opaque, light transfers through transparent substrate 420 and cell walls 428. To assure proper light coloration of each cell, the cavity walls may also be partially coated with the color filter material.

Figure 5 shows the lower portion of inner walls 504 coated with the filter material. One method of partially coating inner walls 504 is to jet print color filter material 516 into the cells 508. The jet printed filter material coats electrodes 524 and substrate 520. Some of the jet printed filter material also coats the inner walls 504 of the cells. The inner wall coating of the cell may be enhanced by making the inner walls hydrophilic prior to jet-printing. Various techniques may be used to make the inner walls hydrophilic including ozone or oxygen plasma treatment. The sidewall coating height is determined by the amount of color filter material dispensed into the cells. In order to achieve a relatively conformal coating of the sidewalls and the bottom of the cells, a relatively dilute color filter solution may be printed several times into a cell, followed by a drying step after each deposition. By repeated deposition and drying, several layers of the color filter material are deposited in order to achieve a sufficient optical density on the sidewalls.

A protective layer or surface coating 528 deposited by jet printing or an equivalent technique over the color filter material serves as a barrier that protects the color filter. However, the protective layer or surface coating 528 may also serve other essential functions for the display operation. Often the interaction of the display material with the surrounding surfaces is critical. For example, in particle displays, a surface conditioning coating is often used to adjust or control the adhesion of display particle to cell surfaces. In particular, a certain amount of particle adhesion is desirable on the cell bottom and top surface to assure bistability of vertically driven particle displays. However, particle adhesion to the sidewalls is undesirable. Materials such as fluorocarbons, silicones, silsesquioxanes or functional silanes or silazanes may be used as the protective layer, but also styrenes, polycarbonates, PVC, polyvinylbutyral, epoxy-based polymers, PMMA, polyurethanes, polyvinylalcohol, polyvinylpyrrolidone, polyvinylphenol, PVM/MA copolymers, gelatin and other materials may be used as the protective layer or surface coating 528 or a second protective coating or layer 554. The materials may also be composites such as a polymer with embedded nanoparticles, the nanoparticles increasing the surface coating roughness. Increased surface coating roughness may reduce or increase the interaction of the display material with surface coatings 528, 550, 554 (for example, by increasing or decreasing the Van der Waals interaction).

It should be noted, that display particles move laterally or "sideways in laterally driven particle displays. In laterally driven particle displays it may be desirable that the sidewalls possess a certain amount of adhesive force to assure bistability while particle adherence to the top and bottom surface is undesirable. Jet-printing methods allow coating of the sidewalls with one material coating 550 and the bottom of the cells with a second different material coating 554 as illustrated in Figure 5b. The selective coating of the side surfaces and the bottom surface can be achieved by adjusting the volume of dispensed material. Tilting the printhead in order to preferentially deposit material on the side walls can also be used to adjust printed drops directionality.

In one embodiment, coatings 550 and coating 554 may be materials which exhibit different interaction with the display material. In electrophoretic displays, the coating interaction with the charged electrophoretic particles is carefully controlled. Differences in the surface energy of the materials, microroughness of the materials and charging behavior may influence the interaction. The coatings may contain, for example, long-chain molecules such as long alkyl chains that interact with similar molecular chains on the surfaces of the display particles. This interaction may cause steric repulsion or electrostatic repulsion, as well as electrostatic or Van der Waals attraction forces. Using the control permitted by jet printing even allows the coatings to differ between adjacent cells. This is important if different electrophoretic inks or different display fluids are applied to neighboring cells. For example, in a cell with one color filter, the display material may have a different density (e.g. particle density) from a cell with a second color filter to enable achieving a wider color gamut or a different appearance of the display compared to just one type of display material. Different particles or display materials may require different surface coatings. The surface coatings may also include functional coating such as silanes, silazanes or coatings that dissipate surface charge. In Figure 5b, the protective coating height along inner wall 504 exceeds the color filter material height thereby protecting the color filter material. Such a protective layer 528 may be particularly desirable in cases where chemical reactions may occur between the display material subsequently deposited in the cell and the filter material.

One example of a surface coating used as a protective layer is a low-surface-energy coating, such as the fluorocarbon polymer Cytop by Asahi Chemical Corporation of Tokyo, Japan. One problem with the coating material is that if the coating material reaches the top area 512 of inner wall 504, the coating may interfere with the cell sealing. In particular the protective layer material may interfere with bonding or overcoating techniques used to seal the cell. This is particularly the case for a low-surface energy coating such as a fluorocarbon polymer (Cytop). In such materials, the sealing solution may dewet or form only a weak bond and bonded materials may delaminate.

A method of controlling the protective coating layer height is by controlling the amount of ejected coating material such that a small enough quantity of solution is ejected that the top 512 of inner wall 504 remains uncoated. In one example, the liquid is jet-printed into the cells up to the desired upper level. After the carrier solvent evaporates, a thin layer of the protective coating remains on the sidewalls below the upper level and on the bottom surface of the cell. The surface coating thickness may be adjusted by controlling the solvent to polymer ratio in the solution.

Jet-printing may also be employed in order to deposit an adhesive material onto the top rim of the walls in top area 512. This material may be a polymer such as the epoxy SU-8 which is thermoplastic in its uncured form. By pushing a counter plate or top plate such as shown in Fig 4 onto the cells, a bond may be established between the walls and the counter plate. Heat may be applied to soften the thermoplastic bonding polymer. Other polymers, such as pressure sensitive adhesives or UV curable adhesives may also be used.

Although Figure 4 and Figure 5 show the deposition of a filter and a subsequent protective layer deposition, it should be understood that the protective layer material may also be deposited prior to color filter deposition. In such cases, the filter material may be selected such that the solution of the filter material is denser than the solution of the protective layer material. Thus the filter material "sinks" into the solution of the protective material and is encapsulated by the protective material. In this case the filter material may remain encapsulated as a liquid layer unless the sealing material is permeable enough to let the solvent of the color filter material penetrate. Likewise, in the structure of Figure 1-3, the display material may be deposited after deposition of the protective material solution. In such cases, the display material sinks into the protective material and is encapsulated.

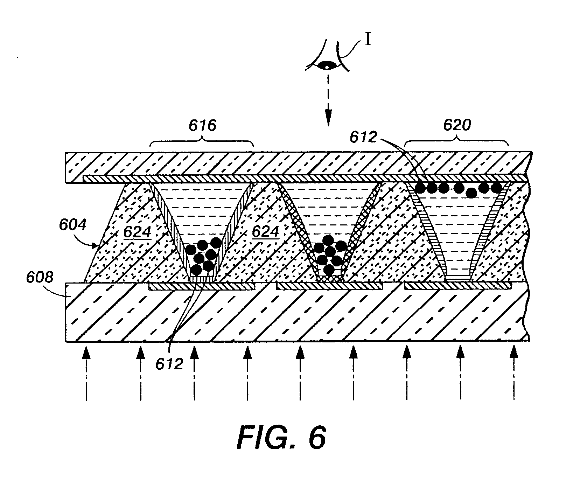

Although vertical cell walls that form an approximately perpendicular angle with the underlying substrate have been shown, a cell should not be so narrowly defined. Figure 6 shows cell walls 604 that are angled with respect to underlying substrate 608. In a first state shown in cell 616, the angled cell walls result in lateral concentration of the display particles 612 at the cell base. In a second state shown in cell 620, the angled cell walls result in lateral spreading of the display particles 616. The cell wall material 624 may be transparent or reflective depending on the type of display being formed. Transparent cell wall materials are particularly suitable when a transflective display including a display backlight is being used. In an alternate embodiment, a reflect substrate 608 (either specular or diffuse) is used to reflect light from behind the color filters.

## Claims

1. A display comprising:
a bottom substrate;
an array of cells (108) of the display, at least one cell defined by cell walls (104) formed over the bottom substrate;
a display material (112) occupying a first portion of the cell (108), the display material arranged to control the amount of light passing through part of the cell; and
colour filter material (128) deposited in a second portion of the cell (108), the second portion spatially separated from the first portion, the color filter material (128) arranged to control the colour of light passing through a part of the cell, **characterized in that** a sealing layer (120) separating the display material (112) from the colour filter material (128) is provided, the sealing layer occupying a third portion of the cell (108).

2. The display of claim 1, further comprising:
a substantially transparent top plate (324) bonded to the top of the cell walls (104), the top plate arranged to seal in the colour filter material (128) and the display material (112).

3. The display of claim 1 or claim 2, further comprising:
electrodes (116) coupled to the bottom substrate, the electrodes arranged to control the light transmission properties of the display material (112).

4. The display of any of the preceding claims, wherein a coating material (528) coats the bottom of the cell (108) but not more than 15% of the vertical cell wall area, the coating material arranged to control display particle adhesion.

5. The display of any of the preceding claims, wherein the display is an electrophoretic display and the display material (112) includes charged particles used to form the electrophoretic display.

6. The display of any of the preceding claims, wherein the cell has cell wall heights of less than 500 microns.

7. A method of forming a display comprising in the following order the operations of:
forming a cell (108) defined by cell walls (104) on a bottom substrate, the cell walls (104) surrounding a cell cavity;
filling a first portion of the cell cavity with a display material (112);
sealing the display material with a sealing polymer (120) in the first portion of the cell cavity;
filling a second portion of the cell cavity with a colour filter material (128) such that the combination of the display material, the sealing material and the colour filter material approximately fill the cell cavity.

8. The method of claim 7, wherein the display material (128) is deposited in a solution form, evaporation of a portion of the solution making space in the cell for the colour filter material.

9. The method of claim 7 or claim 8, further comprising:
sealing the cell by depositing a material over the top of the cell walls.

10. A method of forming a display comprising in the following order the operations of:
forming a cell defined by cell walls on a bottom surface, the cell wall surrounding a cell cavity;
sealing a colour filter in a bottom portion of the cell cavity;
depositing a display material in a top portion of the cell cavity; and sealing the display material.

11. The method of claim 10, wherein the sealing of the colour filter further comprises:
depositing a colour filter in the bottom portion of the cell cavity; and
depositing a sealing material over the colour filter.

12. The method of claim 10, wherein the sealing of the colour filter further comprises:
depositing a sealing material in the bottom of the cell cavity; and
depositing a colour filter such that the colour filter sinks into and is sealed by the sealing material.

13. The method of any of claims 7 to 12, wherein the colour filter material is jet printed such that different colours are deposited in adjacent cell cavities.

14. A method according to any of claims 7 to 13, wherein the cell walls (104) are formed by jet printing.

## Patentansprüche

1. Anzeigevorrichtung, enthaltend:
ein Bodensubstrat;
eine Anordnung von Zellen (108) der Anzeigevorrichtung, wobei wenigstens eine Zelle durch Zellwände (104) begrenzt ist, die über dem Bodensubstrat ausgebildet sind;
ein Anzeigematerial (112), das einen ersten Abschnitt der Zelle (108) ausfüllt, wobei das Anzeigematerial dazu eingerichtet ist, die Lichtmenge zu steuern, die einen Teil der Zelle durchläuft; und
ein Farbfiltermaterial (128), das in einem zweiten Abschnitt der Zelle (108) abgeschieden ist, wobei der zweite Abschnitt von dem ersten Abschnitt räumlich getrennt ist und das Farbfiltermaterial (128) dazu eingerichtet ist, die Farbe des Lichtes zu steuern, das einen Teil der Zelle durchläuft, **dadurch gekennzeichnet, dass** eine Versiegelungsschicht (120), die das Anzeigematerial (112) von dem Farbfiltermaterial (128) trennt, vorgesehen ist, wobei die Versiegelungsschicht einen dritten Abschnitt der Zelle (108) ausfüllt.

2. Anzeigevorrichtung nach Anspruch 1, weiterhin enthaltend:
eine im wesentlichen transparente Deckplatte (324), die mit der Oberseite der Zellwände (104) verbunden ist, wobei die Deckplatte dazu eingerichtet ist, das Farbfiltermaterial (128) und das Anzeigematerial (112) zu versiegeln.

3. Anzeigevorrichtung nach Anspruch 1 oder 2, weiterhin enthaltend:
Elektroden (116), die mit dem Bodensubstrat verbunden sind, wobei die Elektroden dazu eingerichtet sind, die Lichtleiteigenschaften des Anzeigematerials (112) zu steuern.

4. Anzeigevorrichtung nach einem der vorhergehenden Ansprüche, bei der das Beschichtungsmaterial (528) den Boden der Zelle (108) beschichtet, jedoch nicht mehr als 15% der vertikalen Zellwandfläche, wobei das Beschichtungsmaterial dazu eingerichtet ist, die Anzeigepartikelhaftung zu steuern.

5. Anzeigevorrichtung nach einem der vorhergehenden Ansprüche, wobei die Anzeigevorrichtung eine elektrophoretische Anzeigevorrichtung ist und das Anzeigematerial (112) geladene Partikel enthält, die dazu verwendet werden, die elektrophoretische Anzeigevorrichtung auszubilden.

6. Anzeigevorrichtung nach einem der vorhergehenden Ansprüche, bei der die Zellen eine Zellwandhöhe von weniger als 500 µm haben.

7. Verfahren zum Ausbilden einer Anzeigevorrichtung, umfassend die folgenden Vorgänge in der folgenden Reihenfolge:
Ausbilden einer Zelle (108), die durch Zellewände (104) begrenzt ist, auf einem Bodensubstrat, wobei die Zellwände (104) einen Zellhohlraum umgeben;
Befüllen eines ersten Abschnittes des Zellhohlraumes mit einem Anzeigematerial (112);
Versiegeln des Anzeigematerials mit einem Versiegelungspolymer (120) in dem ersten Abschnitt des Zellhohlraumes; und
Befüllen eines zweiten Abschnittes des Zellhohlraumes mit einem Farbfiltermaterial (128), so dass die Kombination aus Anzeigematerial, Versiegelungsmaterial und Farbfiltermaterial den Zellhohlraum annähernd ausfüllt.

8. Verfahren nach Anspruch 7, bei dem das Anzeigematerial (128) in gelöster Form abgeschieden wird, wobei das Verdampfen eines Teils der Lösung Raum für das Farbfiltermaterial in der Zelle erzeugt.

9. Verfahren nach Anspruch 7 oder 8, weiterhin umfassend:
Versiegeln der Zelle durch Abscheiden eines Materials auf der Oberseite der Zellenwände.

10. Verfahren zum Ausbilden einer Anzeigevorrichtung, umfassend die folgenden Vorgänge in der folgenden Reihenfolge:
Ausbilden einer Zelle, die durch Zellwände begrenzt ist, auf einer Bodenfläche, wobei die Zellwände einen Zellhohlraum umgeben;
Versiegeln eines Farbfilters in einem Bodenabschnitt des Zellhohlraumes;
Abscheiden eines Anzeigematerials in einem oberen Abschnitt des Zellhohlraumes; und
Versiegeln des Anzeigematerials.

11. Verfahren nach Anspruch 10, bei dem das Versiegeln des Farbfilters weiterhin umfasst:
Abscheiden eines Farbfilters in dem Bodenabschnitt des Zellhohlraumes; und
Abscheiden eines Versiegelungsmaterials über dem Farbfilter.

12. Verfahren nach Anspruch 10, bei dem das Versiegeln des Farbfilters weiterhin umfasst:
Abscheiden eines Versiegelungsmaterials auf dem Boden des Zellhohlraumes; und
Abscheiden eines Farbfilters, so dass das Farbfilter einsinkt und von dem Versiegelungsmaterial versiegelt wird.

13. Verfahren nach einem der Ansprüche 7 bis 12, bei dem das Farbfiltermaterial durch einen Strahl aufgedruckt wird, so dass unterschiedliche Farben in benachbarten Zellhohlräumen abgeschieden werden.

14. Verfahren nach einem der Ansprüche 7 bis 13, bei dem die Zellwände (104) durch Strahldrucken ausgebildet werden.

## Revendications

1. Dispositif d'affichage comprenant :
un substrat inférieur ;
un réseau de cellules (108) du dispositif d'affichage, au moins une cellule définie par des parois cellulaires (104) formée sur le substrat inférieur ;
un matériau d'affichage (112) occupant une première partie de la cellule (108), le matériau d'affichage est agencé pour commander la quantité de lumière traversant une partie de la cellule ; et
un matériau (128) de filtre de couleur déposé dans une deuxième partie de la cellule (108), la deuxième partie séparée spatialement de la première partie, le matériau (128) de filtre de couleur est agencé pour commander la couleur de la lumière traversant une partie de la cellule, **caractérisé en ce qu'**une couche d'étanchéité (120) séparant le matériau d'affichage (112) du matériau (128) de filtre de couleur est prévue, la couche d'étanchéité occupant une troisième partie de la cellule (108).

2. Dispositif d'affichage de la revendication 1, comprenant en outre :
une plaque supérieure (324) essentiellement transparente liée à la partie supérieure des parois cellulaires (104), la plaque supérieure est disposée pour sceller le matériau (128) de filtre de couleur et le matériau d'affichage (112).

3. Dispositif d'affichage de la revendication 1 ou 2, comprenant en outre :
des électrodes (116) couplées au substrat de base, les électrodes étant agencées pour commander les propriétés de transmission de lumière du matériau d'affichage (112).

4. Dispositif d'affichage de l'une des revendications précédentes, dans lequel un matériau de revêtement (528) enrobe la partie inférieure de la cellule (108) mais pas plus que 15% de la surface de paroi cellulaire verticale, le matériau de revêtement est agencé pour commander l'adhérence des particules d'affichage.

5. Dispositif d'affichage de l'une des revendications précédentes, dans lequel le dispositif d'affichage est un écran électrophorétique, et le matériau d'affichage (112) comporte des particules chargées utilisées pour former l'écran électrophorétique.

6. Dispositif d'affichage de l'une des revendications précédentes, dans lequel la cellule a des hauteurs de parois cellulaires inférieures à 500 microns.

7. Procédé de formation d'un dispositif d'affichage comprenant dans l'ordre suivant les opérations qui consistent :
à former une cellule (108) définie par des parois cellulaires (104) sur un substrat inférieur, les parois cellulaires (104) entourant une cavité cellulaire ;
à remplir une première partie de la cavité cellulaire d'un matériau d'affichage (112) ;
à sceller le matériau d'affichage par un polymère d'étanchéité (120) dans la première partie de la cavité cellulaire ;
à remplir une deuxième partie de la cavité cellulaire d'un matériau (128) de filtre de couleur de sorte que la combinaison du matériau d'affichage, du matériau d'étanchéité et du matériau de filtre de couleur remplisse approximativement la cavité cellulaire.

8. Procédé de la revendication 7, dans lequel le matériau d'affichage (128) est déposé sous forme de solution, l'évaporation d'une partie de la solution créant un espace pour le matériau de filtre de couleur dans la cellule.

9. Procédé de la revendication 7 ou 8, comprenant en outre le fait :
de sceller la cellule en déposant un matériau sur la partie supérieure des parois cellulaires.

10. Procédé de formation d'un dispositif d'affichage comprenant dans l'ordre suivant les opérations qui consistent :
à former une cellule définie par des parois cellulaires sur une surface inférieure, les parois cellulaires entourant une cavité cellulaire ;
à sceller un filtre de couleur dans une partie inférieure de la cavité cellulaire ;
à déposer un matériau d'affichage dans une partie supérieure de la cavité cellulaire ; et
à sceller le matériau d'affichage.

11. Procédé de la revendication 10, dans lequel le scellement du filtre de couleur comprend en outre :
le dépôt d'un filtre de couleur dans la partie inférieure de la cavité cellulaire ; et
le dépôt d'un matériau d'étanchéité sur le filtre de couleur.

12. Procédé de la revendication 10, dans lequel le scellement du filtre de couleur comprend en outre :
le dépôt d'un matériau d'étanchéité dans la partie inférieure de la cavité cellulaire ; et
le dépôt d'un filtre de couleur de sorte que le filtre de couleur s'enfonce dans le matériau d'étanchéité et est scellé par celui-ci.

13. Procédé de l'une des revendications 7 à 12, dans lequel le matériau de filtre de couleur est imprimé par jet d'encre de sorte que des différentes couleurs sont déposées dans des cavités cellulaires adjacentes.

14. Procédé selon l'une des revendications 7 à 13, dans lequel les parois cellulaires (104) sont formées par impression par jet d'encre.
